(19) Europäisches Patentamt
European Patent Office
Office européen des brevets

(11) **EP 4 694 297 A1**

(12) **EUROPEAN PATENT APPLICATION**
published in accordance with Art. 153(4) EPC

(43) Date of publication:
**11.02.2026  Bulletin 2026/07**

(21) Application number: **24785302.1**

(22) Date of filing: **05.04.2024**

(51) International Patent Classification (IPC):
**H04W 24/08** (2009.01)    **H04W 68/02** (2009.01)
**H04W 52/02** (2009.01)    **H04W 76/28** (2018.01)
**H04B 17/318** (2015.01)

(52) Cooperative Patent Classification (CPC):
Y02D 30/70

(86) International application number:
**PCT/KR2024/004494**

(87) International publication number:
**WO 2024/210602 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.04.2023  KR 20230045681**

(71) Applicant: **LG Electronics Inc.**
**Yeongdeungpo-gu**
**Seoul 07336 (KR)**

(72) Inventors:
• **LEE, Sunghoon**
  **Seoul 06772 (KR)**
• **KIM, Jaehyung**
  **Seoul 06772 (KR)**
• **YANG, Suckchel**
  **Seoul 06772 (KR)**
• **CHOI, Seunghwan**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING AND RECEIVING SIGNALS IN WIRELESS COMMUNICATION SYSTEM**

(57)    ABSTRACT: A method by which a terminal performs radio resource management (RRM) measurement in a wireless communication system, according to an example of the present disclosure, comprises: receiving discontinuous reception (DRX) configuration information including information about a DRX cycle; and performing RRM measurement at least once for each of M DRX cycles configured through the DRX configuration information, on the basis of a signal having a first type waveform, wherein the terminal may perform the RRM measurement in a first DRX cycle in which monitoring of a paging signal is performed, on the basis that a wake-up signal (WUS) having a second type waveform different from the first type waveform is detected while the terminal is in an RRC idle/inactive state.

FIG. 16

## Description

### TECHNICAL FIELD

The present disclosure relates to a wireless communication system, and more particularly, to a method and apparatus for transmitting and receiving an uplink/downlink signal.

### BACKGROUND

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

### DISCLOSURE

### TECHNICAL PROBLEM

An object of the present disclosure is to provide a method and apparatus for transmitting or receiving a signal more accurately and efficiently in a wireless communication system.

Other technical objects may be derived from embodiments disclosed in the detailed description.

### TECHNICAL SOLUTION

In an aspect of the present disclosure, provided herein is a method of performing radio resource management (RRM) measurement by a user equipment (UE) in a wireless communication system. The method may include: receiving discontinuous reception (DRX) configuration information including information regarding a DRX cycle; and performing the RRM measurement based on a signal having a first type waveform, at least once per M DRX cycles configured through the DRX configuration information. Based on detection of a wake-up signal (WUS) having a second type waveform different from the first type waveform in an RRC idle/inactive state, the UE may perform the RRM measurement in a first DRX cycle in which monitoring of a paging signal is performed.

The RRM measurement may be performed after a first time resource at which a paging procedure related to the monitoring of the paging signal is completed within the first DRX cycle.

The RRM measurement may be performed based on a first synchronization signal block (SSB) provided after the first time resource among configured SSBs within the first DRX cycle.

The first SSB may be an SSB closest to the first time resource among one or more SSBs provided after the first time resource.

The first SSB may be an SSB included in an earliest SSB-based measurement time configuration (SMTC) window provided after the first time resource.

Based on that no SSB is included in a first SMTC window that is provided earliest in time after the first time resource, a second SMTC window including the first SSB may be additionally configured.

The RRM measurement may be performed through a first reception procedure supporting the first type waveform, and the detection of the WUS may be performed through a second reception procedure supporting the second type waveform. The second reception procedure may consume less power than the first reception procedure.

The first reception procedure, which is deactivated at a time of the detection of the WUS, may be activated in the first DRX cycle. After a paging procedure related to the monitoring of the paging signal and the RRM measurement in the first DRX cycle are completed, the first reception procedure may be deactivated again.

The first type waveform may be related to orthogonal frequency divisional multiplexing (OFDM), and the second type waveform may be related to non-OFDM.

In another aspect of the present disclosure, provided herein is a computer-readable recording medium having recorded thereon a program for performing the aforementioned method.

In another aspect of the present disclosure, provided herein is a device for wireless communication. The device includes: a memory configured to store instructions; and a processor configured to perform operations by executing the instructions. The operations of the processor may include: receiving DRX configuration information including information regarding a DRX cycle; and performing RRM measurement based on a signal having a first type waveform at least once per M DRX cycles configured through the DRX configuration information. Based on detection of a WUS having a second type waveform different from the first type waveform in an RRC idle/inactive state, the RRM measurement may be performed in a first DRX cycle in which monitoring of a paging signal is performed.

The device may further include: a first receiver configured to support the first type waveform; and a second receiver configured to support the second type waveform. The second receiver may consume less power than the first receiver.

The device may be a UE operating in a wireless communication system or a processing device configured to control the UE.

In another aspect of the present disclosure, provided herein is a method of transmitting signals by a base station (BS) in a wireless communication system. The method may include: transmitting DRX configuration information including information regarding a DRX cycle to a UE; transmitting RRM configuration information for performing RRM measurement at least once per M DRX cycles to the UE; transmitting a signal having a first type waveform related to the RRM measurement of the UE; and transmitting a WUS having a second type waveform different from the first type waveform while the UE is in an RRC idle/inactive state. Based on the transmission of the WUS, the DRX cycle in which the RRM measurement of the UE is performed may be configured to be identical to a first DRX cycle including a paging occasion (PO) associated with the WUS.

In a further aspect of the present disclosure, provided herein is a BS for wireless communication. The BS may include: a memory configured to store instructions; and a processor configured to perform operations by executing the instructions. The operations of the processor include: transmitting DRX configuration information including information regarding a DRX cycle to a UE; transmitting RRM configuration information for performing RRM measurement at least once per M DRX cycles to the UE; transmitting a signal having a first type waveform related to the RRM measurement of the UE; and transmitting a WUS having a second type waveform different from the first type waveform while the UE is in an RRC idle/inactive state. Based on the transmission of the WUS, the DRX cycle in which the RRM measurement of the UE is performed may be configured to be identical to a first DRX cycle including a PO associated with the WUS.

## ADVANTAGEOUS EFFECTS

According to an embodiment, a signal may be transmitted/received more accurately and more efficiently in a wireless communication system.

Other technical effects may be derived from embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating a discontinuous reception (DRX) related operation.

FIG. 11 is a diagram illustrating a wake-up signal (WUS).

FIG. 12 illustrates an example in which a paging-related procedure and radio resource management (RRM) measurement are performed independently.

FIG. 13 is a diagram for explaining a user equipment (UE) operation of performing RRM measurement together using a triggered main radio (MR).

FIG. 14 is a diagram for explaining RRM measurement of a UE when no MR wake-up is triggered.

FIG. 15 is a diagram for explaining paging operation of a UE and related RRM measurement in the same DRX cycle according to an embodiment.

FIG. 16 is a diagram for explaining operations of a network and a UE related to RRM measurement in a wireless communication system according to an embodiment.

FIGS. 17 and 18 are diagrams for explaining operations of a UE according to an embodiment.

FIG. 19 is a diagram for explaining operations of a BS according to an embodiment.

FIGS. 20 to 23 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

The term "base station" used in this specification may be replaced with terms such as a fixed station, Node B, gNode B (gNB), access point (AP), cell, or transmission and reception point (TRP). The term "relay" may be replaced with terms such as a relay node (RN) or relay station. In addition, the term "terminal" may be replaced with terms such as a user equipment (UE), mobile station (MS), mobile subscriber station (MSS), or subscriber station (SS).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

<u>3GPP LTE</u>

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

<u>Terms and Abbreviations</u>

- 5GC: 5G Core Network
- 5GS: 5G System
- AP: Access Point
- CID: Cell ID

- E-CID: Enhanced Cell ID
- PRS: Positioning Reference Signal
- RRM: Radio Resource Management
- TP: Transmission Point
- TRP: Transmission and Reception Point
- UE: User Equipment
- SSB: Synchronization Signal Block
- SFN: System Frame Number
- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG (Secondary Cell Group) Cell
- CA: Carrier Aggregation
- WUS: Wake up Signal
- PO: Paging Occasion
- PEI: Paging Early Indication
- PEI-O: PEI Occasion
- NES: Network Energy Saving
- RO: RACH Occasion
- RAR: Random Access Response
- SDT: Small Data Transmission
- LP-WUS: Low Power Wake-Up Signal
- XR : Abbreviation for extended Reality. VR(virtual reality), AR(augmented reality), MR(mixed reality)
- RRM : Radio Resource Management

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

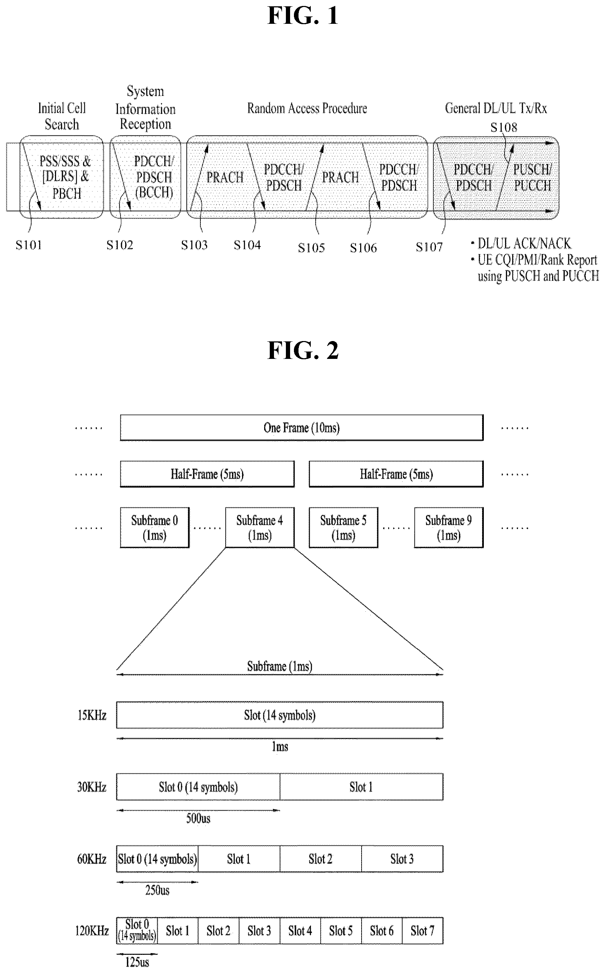

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

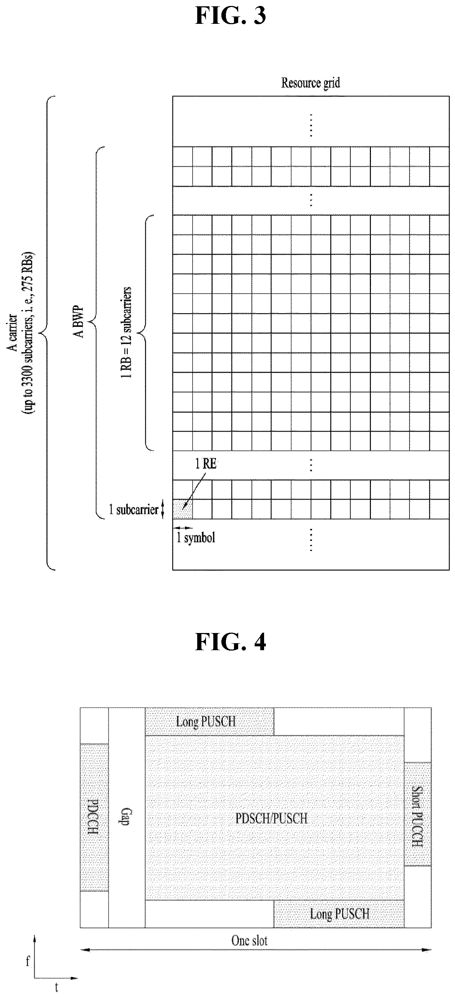

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

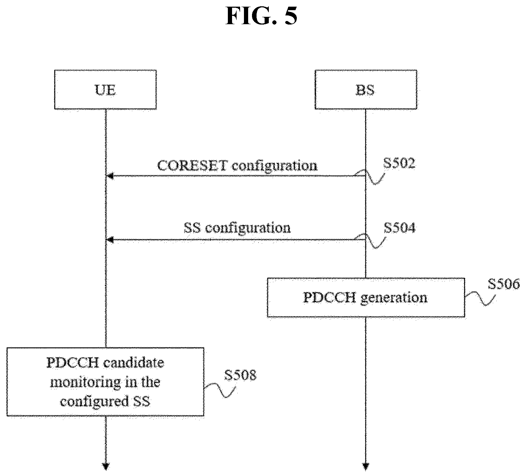

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type 1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

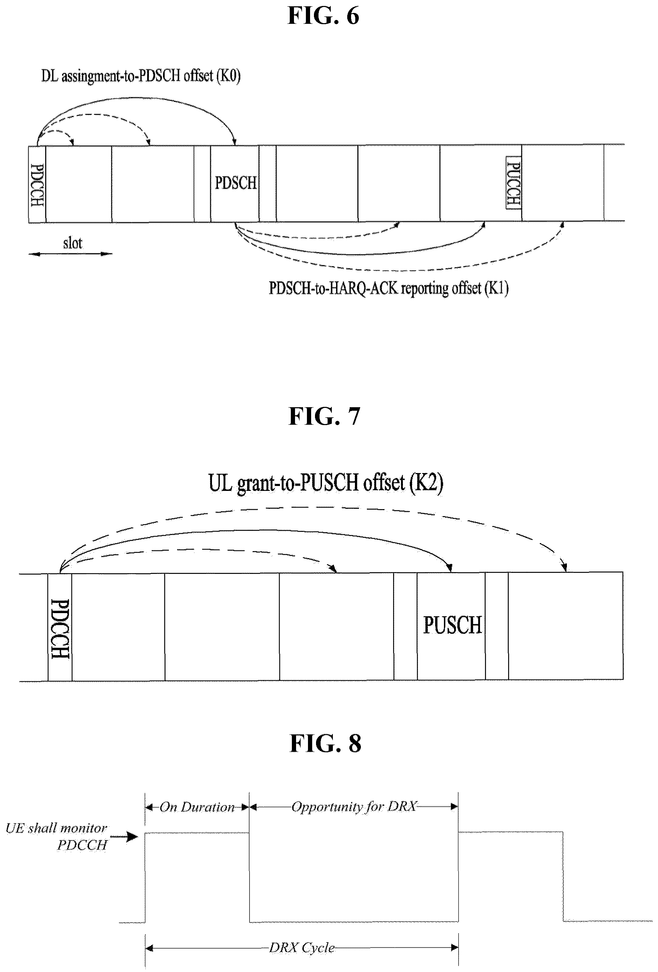

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1) and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC_INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC_INACTIVE state. A paging DRX cycle is configured by the network, as follows.

1) In the case of CN-initiated paging, a default cycle is broadcast in system information.
2) In the case of CN-initiated paging, a UE-specific cycle is configured by NAS signaling.
3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \operatorname{div} N)*(UE\_ID \bmod N)$$

- An index i_s indicating the index of the PO is determined by:

$$i\_s = \text{floor}(UE\_ID/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

|          | Type of signals                            | UE procedure                                          |
|----------|--------------------------------------------|-------------------------------------------------------|
| 1st step | RRC signalling (MAC-CellGroupConfig)       | - Receive DRX configuration information               |
| 2nd Step | MAC CE ((Long) DRX command MAC CE)         | - Receive DRX command                                 |
| 3rd Step | -                                          | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

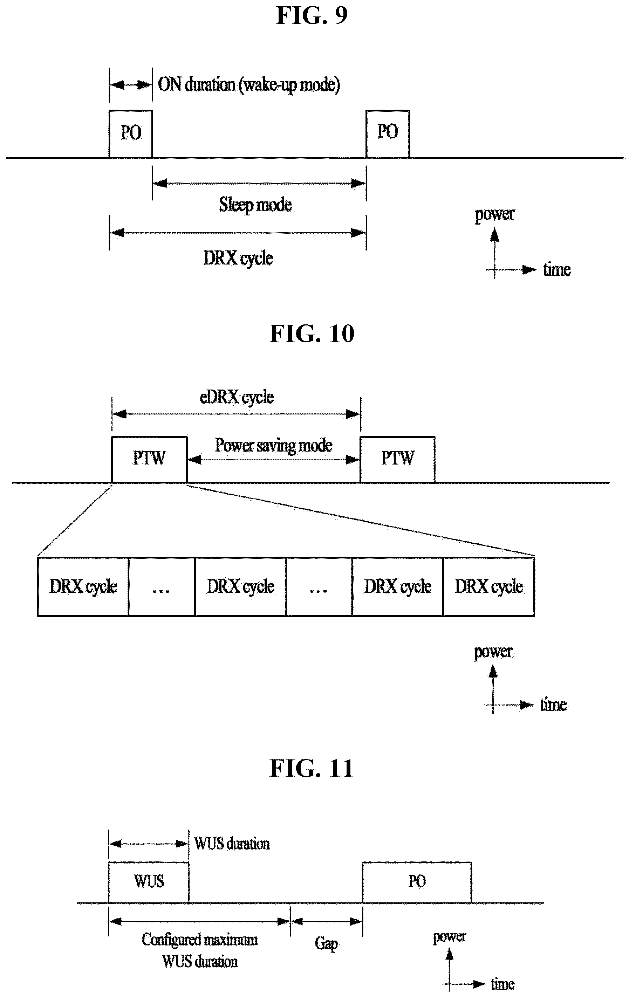

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

## WUS (Wake-up signal)/PEI (Paging Early Indication)

In LTE Rel-15 Narrowband Internet of Things (NB-IoT) and Machine Type Communication (MTC), a wake-up signal (WUS) was introduced to save power of a UE. The WUS is a signal indicating preliminarily whether there is an actual paging transmission in a paging SS at a specific position. When the BS wants to transmit paging in a PO at a specific position, the BS may transmit a WUS at WUS transmission position(s) associated with the PO. The UE monitors the WUS transmission positions associated with the PO at the specific position. Upon detection of the WUS at the WUS transmission position(s), the UE may expect that paging will be transmitted in the PO, whereas when failing to detect the WUS at the WUS transmission position(s), the UE may not expect paging in the PO. The gain of power saving may be achieved by this operation. In LTE Rel-16 NB-IoT and MTC, a UE-group WUS was introduced to increase the power saving gain of the Rel-15 WUS. The UE-group WUS may advantageously reduce an unnecessary wakeup probability of a UE by using a WUS transmission position and sequence determined based on the UE-group ID of the UE.

FIG. 11 is a diagram illustrating a WUS in an LTE system. Referring to FIG. 11, in MTC and NB-IoT, the WUS may be used to reduce power consumption related to paging monitoring. The WUS is a physical layer signal indicating whether a UE is supposed to monitor a paging signal (e.g., an MPDCCH/NPDCCH scrambled with a P-RNTI) according to a cell configuration. For a UE which is not configured with eDRX (i.e., configured only with DRX), the WUS may be associated with one PO (N=1). On the contrary, for a UE configured with eDRX, the WUS may be associated with one or more POs (N≥1). Upon detection of the WUS, the UE may monitor N POs after being associated with the WUS. When failing to detect the WUS, the UE may maintain sleep mode by skipping PO monitoring until the next WUS monitoring. The UE may receive WUS configuration information from the BS and monitor the WUS based on the WUS configuration information. The WUS configuration information may include, for example, a maximum WUS duration, the number of consecutive POs associated with the WUS, and gap information. The maximum WUS duration may refer to a maximum time period during which the WUS may be transmitted, and may be expressed as a ratio to a maximum repetition number (e.g., Rmax) related to a PDCCH (e.g., MPDCCH or NPDCCH). Although the UE may expect repeated WUS transmissions within the maximum WUS duration, the number of actual WUS transmissions may be less than a maximum number of WUS transmissions within the maximum WUS duration. For example, the number of WUS repetitions may be small for a UE in good coverage. A resource/occasion in which the WUS may be transmitted within the maximum WUS duration is referred to as a WUS resource. The WUS resource may be defined as a plurality of consecutive OFDM symbols by a plurality of consecutive subcarriers. The WUS resource may be defined as a plurality of consecutive OFDM symbols by a plurality of consecutive subcarriers in a subframe or slot. For example, the WUS resource may be defined as 14 consecutive OFDM symbols by 12 consecutive subcarriers. Upon detection of the WUS, the UE does not monitor the WUS until a first PO associated with the WUS. When the WUS is not detected during the maximum WUS duration, the UE does not monitor a paging signal in POs associated with the WUS (or the UE remains in the sleep mode).

In a communication system such as NR, it may be indicated by a paging early indication (PEI) (e.g., a PEI based on a sequence or DCI) whether the UE should monitor paging DCI in a PO or whether paging DCI is provided. When the UE succeeds in detecting the PEI, the UE monitors the paging DCI (and/or a PDSCH carrying a corresponding paging message). When failing in detecting the PEI, the UE may skip monitoring of the paging DCI in the PO.

## RRM measurement related to UE paging

In the present disclosure, based on the terminology used in the standardization discussions related to a low-power wake-up signal (LP-WUS), a main radio is referred to as an MR, and a low-power wake-up receiver (LP-WUR) is referred to as an LR.

The MR refers to a general receiver for signal reception at a NR UE, and the MR may be used to receive NR OFDM signals, etc. In other words, the receiver of the UE in the current NR standard may be understood as the MR.

The LP-WUR refers to a receiver that is newly added to the UE to receive low-power signals, and through the LP-WUR, newly designed low-power signals such as an LP-WUS or lower power synchronization signal (LP-SS) may be received. The LP-WUR may have characteristics of lower cost and lower power consumption compared to the MR.

Specifically, according to the current NR standard, the UE needs to periodically wake up every DRX cycle, which contributes significantly to power consumption during periods without signal or information transmission. If the UE could wake up only when triggered (for example, to perform paging operation), the power consumption of the UE may be greatly reduced. To this end, the LP-WUS may be used to trigger the MR, and the LP-WUS may be received by introducing the LR, which is a separate receiver capable of operating with ultra-low power consumption.

LR signals such as the LP-WUS or LP-SS may be configured/transmitted differently from MR signals in the time/frequency domain. For example, LR signals such as the LP-WUS/LP-SS may be modulated with on-off keying OOK. OOK-modulated LR signals are aligned to the boundaries of time resources (e.g., slots or symbols in the time domain), but may be transmitted without alignment to the boundaries of frequency resources (e.g., REs or subcarriers in the frequency domain). For example, the LP-WUS may be configured to represent the presence or absence (1/0) of a signal within a specific time duration, and the UE may receive the LP-WUS only through energy detection (or envelope detection) of the LP-WUS within the specific time duration.

The OOK symbol of the LP-WUS may be overlaid with i) a sequence for spectrum flattening, ii) an OFDM sequence for increasing transmission coverage, and/or iii) an OFDM sequence for additional information transmission. In the case of ii)/iii), the LR signal may be an OOK sequence detectable through envelope detection, and ON symbols of the sequence may consist of OFDM-modulated symbols. Particularly, in the case of iii), if OFDM demodulation is possible for the OFDM overlaid OOK sequence, additional meaningful information bits may be obtained.

The LR signal may be either a general OOK signal (without overlaid OFDM) or an OFDM overlaid OOK signal. The LP-WUR of the UE may be defined as two types.

- LP-WUR Type #1: A wake-up receiver capable of energy detection only
- LP-WUR Type #2: A wake-up receiver capable of OFDM sequence detection

LP-WUR Type #1 is a low-cost wake-up receiver capable of determining the presence or absence of a signal (energy detection or envelope detection) only. Therefore, LP-WUR Type #1 is a receiver capable of detecting only the OOK signal (e.g., a portion corresponding to the OOK signal excluding the overlaid OFDM in the general OOK signal or OFDM overlaid OOK signal).

Compared to Type #1, LP-WUR Type #2 is a higher-cost wake-up receiver capable of detecting the OFDM sequence as well as performing energy detection. Therefore, LP-WUR Type #2 is a receiver capable of detecting/decoding not only the general OOK signal without overlaid OFDM but also the OFDM overlaid OOK signal. Additionally, LP-WUR Type #2 may also be capable of receiving existing NR signals such as a PSS/SSS.

The UE needs to perform RRM measurement through the MR at a specific periodicity. If the RRM measurement through the MR is capable of being replaced with RRM measurement based on the LP-WUR, the power consumption of the UE may be significantly reduced. In other words, if the MR is capable of remaining in the power-off (or sleep) state for a longer duration without being activated to perform RRM measurement at a specific periodicity, it may be highly effective in reducing the power consumption of the UE. To meet the battery life requirement of the UE, it may be expected that eDRX with a long UE wake-up cycle is configured. However, in this case, high latency may not be avoided, and thus, it may be unsuitable for services that require both low latency and long battery life. Therefore, the discussion of the LP-WUS may be about an ultra-low power mechanism that satisfies lower latency than eDRX.

For the discussion on the LP-WUS/LP-WUR, it was agreed to introduce the "ultra-deep sleep" power state of the MR, which is a state of very low power consumption. It was agreed to set the starting point of the discussion as the ultra-deep sleep state having a relative power of 0.015, similar to the power-off state. Table 6 summarizes the discussion of the recent standardization meeting. In this case, the relative power is a relative value where the MR in the deep sleep state is set to 1, and this may be found in TR 38.840.

[Table 6]

Take the following power model for MR for evaluation in LP-WUS/WUR SI,
- For IoT and wearable cases, reuse TR38.875 power model as baseline.
- For eMBB and other cases, reuse TR38.840 power model as baseline.
- Introduce 'Ultra-deep sleep' power state for MR of UEs with LP-WUS receiver
  - FFS: The details of 'Ultra-deep sleep' power state

- The following power models are used 'Ultra-deep sleep' power state for MR for evaluation

| Power State | Relative Power (unit) | Ramp-up and down transition energy (Note1) : (unit multiplied by ms) | Ramp-up time | Time for Sync. |
|---|---|---|---|---|
| Ultra-deep sleep | [0.015] | [2000 ~ 40000]<br><br>- Study to converge on candidate numbers o use for evaluation<br><br>- FFS: other values an d reported by compa nies.<br><br>- FFS: down-selection of the values,<br><br>- companies are encou raged to provide deta ils for down-selectio n | [400ms], FFS: 100ms | X |

Note1:
- Ramp-up time may consist of the procedure for [MR hardware tune on e.g., boot, memory load and etc.],
- Time for Sync. consists of the procedure for [MR to re-synchronization with the se rving gNB etc.],
  - FFS: X and whether/how to have different values depending on other factors, e.g., signal-to-noise ratio
  - Companies can report the assumption of X in the initial evaluation.
- Ramp up and down energy includes power for ramp-up and ramp-down. Energy c onsumption for Sync. is separately calculated.
- The total time for MR transition from ultra-deep sleep to active/micro sleep state is the sum of ramp-up time and time for Sync..
  - FFS whether/how to define ramp-down time, whether to separately describe the ra

| |
|---|
| mp-down energy consumption<br>Note 2: the power state transitions in this table refer to transitions between ultra deep sleep state and active / micro sleep state.<br>Note 3: The values inside of '[ ]' are to be used as starting point of future study on LP-WU S |

To wake up the MR from the ultra-deep sleep state, {ramp-up/down transition energy, ramp-up time} may be either { 15000, 400ms} or {40000, 800ms}.

If there is no signal or information transmission, the UE transitions the MR to the ultra-deep sleep state and maintains the state. The ultra-deep sleep state of the MR is a state with extremely low power consumption, and as a result, a large amount of energy and time is required to wake up the MR. Therefore, when the LP-WUS/LP-WUR is introduced to the UE, the power consumption may vary significantly depending on how long the MR stays in the ultra-deep sleep state, how infrequently the MR wakes up, and how quickly the MR returns to the ultra-deep sleep state after waking up.

The UE in the RRC Idle/Inactive state usually needs to wake up the MR at least once every DRX cycle to receive signals, and this operation contributes significantly to power consumption during periods without signaling or data traffic. After waking up, the MR receives signals for performing paging or RRM measurement. Typically, for FR1, the UE needs to perform RRM measurement once every one or two DRX cycles. In other words, the UE may need to wake up the MR in every DRX cycle not only for performing paging but also for performing RRM measurement.

According to the current NR standard, the paging and RRM measurement of the UE are performed independently, and in some cases, the UE may wake up twice within a single DRX cycle to perform both the paging and RRM measurement. For example, assuming that the UE needs to perform RRM measurement at least once within a time duration corresponding to M DRX cycles, the UE may autonomously determine in which DRX cycle among the M cycles to perform the RRM measurement, and this is not defined in the existing NR standard. Therefore, depending on the implementation, the UE may wake up in a first DRX cycle for the paging and in a second DRX cycle for the RRM measurement, and there has been no interrelation between the paging and RRM measurement.

Since waking up the MR requires a large amount of energy and time, reducing the number of times that the MR wakes up and the operation duration of the MR after waking up is beneficial for reducing the power consumption of the UE.

From this perspective, if the UE is capable of performing both the paging and RRM measurement by waking up the MR once over a specific time period, the number of times that the MR wakes up and the operation duration of the MR after waking up may be reduced, thereby reducing the power consumption.

The present disclosure describes a method for performing RRM measurement according to the paging operation of the UE to reduce the number of times that the MR wakes up and thereby reduce power consumption.

As shown in Table 6, the ultra-deep sleep state of the MR consumes very little power, but requires a large amount of energy and time to wake up. The UE that follows the standard needs to perform RRM measurement for the serving cell at least once every M1*N1 DRX cycles. In general, the RRM measurement may involve measuring RSRP and RSRQ for a specific signal (e.g., SSB) and calculating a cell selection RX level (Srxlev) and a cell selection quality (Squal) based on the measurement. Table 7 is an excerpt from the standard document TS 38.133, which is related to the measurement operations for SS-RSRP and SS-RSRQ of the UE.

[Table 7]

### 4.2.2.2  Measurement and evaluation of serving cell

The UE shall measure the SS-RSRP and SS-RSRQ level of the serving cell and evaluate the cell selection criterion S defined in TS 38.304 [1] for the serving cell at least once every M1*N1 DRX cycle; where:

M1=2 if SMTC periodicity ($T_{SMTC}$) > 20 ms and DRX cycle $\leq 0.64$ second,

otherwise M1=1.

The UE shall filter the SS-RSRP and SS-RSRQ measurements of the serving cell using at least 2 measurements. Within the set of measurements used for the filtering, at least two measurements shall be spaced by, at least DRX cycle/2.

If the UE has evaluated according to Table 4.2.2.2-1 in $N_{serv}$ consecutive DRX cycles that the serving cell does not fulfil the cell selection criterion S, the UE shall initiate the measurements of all neighbour cells indicated by the serving cell, regardless of the measurement rules currently limiting UE measurement activities.

If the UE in RRC_IDLE has not found any new suitable cell based on searches and measurements using the intra-frequency, inter-frequency and inter-RAT information indicated in the system information for 10 s, the UE shall initiate cell selection procedures for the selected PLMN as defined in TS 38.304 [1].

**Table 4.2.2.2-1: $N_{serv}$**

| DRX cycle length [s] | Scaling Factor (N1) | | | $N_{serv}$ [number of DRX cycles] |
|---|---|---|---|---|
| | **FR1** | **FR2-1**[Note 1] | **FR2-2**[Note 2] | |
| 0.32 | 1 | 8 | 12 | M1*N1*4 |
| 0.64 | | 5 | 8 | M1*N1*4 |
| 1.28 | | 4 | 6 | N1*2 |
| 2.56 | | 3 | 5 | N1*2 |
| Note 1:  Applies for UE supporting FR2-1 power class 2&3&4. For UE supporting FR2-1 power class 1 or 5, N1 = 8 for all DRX cycle length. | | | | |
| Note 2:  Applies for UE supporting FR2-2 power class 2&3. For UE supporting FR2-2 power class 1, N1 = 12 for all DRX cycle length. | | | | |

Table 8 is an excerpt from the standard document TS 38.304, which defines the cell selection criterion of the UE. The UE may calculate Srxlev and Squal to determine whether the current serving cell satisfies the cell selection criterion S.

[Table 8]

The cell selection criterion S is fulfilled when:

Srxlev > 0 AND Squal > 0

where:

$$Srxlev = Q_{rxlevmeas} - (Q_{rxlevmin} + Q_{rxlevminoffset}) - P_{compensation} - Qoffset_{temp}$$

$$Squal = Q_{qualmeas} - (Q_{qualmin} + Q_{qualminoffset}) - Qoffset_{temp}$$

where:

| Srxlev | Cell selection RX level value (dB) |
|---|---|
| Squal | Cell selection quality value (dB) |
| $Qoffset_{temp}$ | Offset temporarily applied to a cell as specified in TS 38.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). If the UE supports SUL frequency for this cell, $Q_{rxlevmin}$ is obtained from *q-RxLevMinSUL*, if present, in *SIB1*, *SIB2* and *SIB4*, additionally, if $Q_{rxlevminoffsetcellSUL}$ is present in *SIB3* and *SIB4* for the concerned cell, this cell specific offset is added to the corresponding Qrxlevmin to achieve the required minimum RX level in the concerned cell; else $Q_{rxlevmin}$ is obtained from *q-RxLevMin* in *SIB1*, *SIB2* and *SIB4*, additionally, if $Q_{rxlevminoffsetcell}$ is present in *SIB3* and *SIB4* for the concerned cell, this cell specific offset is added to the corresponding Qrxlevmin to achieve the required minimum RX level in the concerned cell. |
| $Q_{qualmin}$ | Minimum required quality level in the cell (dB). Additionally, if $Q_{qualminoffsetcell}$ is signalled for the concerned cell, this cell specific offset is added to achieve the required minimum quality level in the concerned cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN, as specified in TS 23.122 [9]. |
| $Q_{qualminoffset}$ | Offset to the signalled $Q_{qualmin}$ taken into account in the Squal evaluation as a result of a periodic search for a higher priority PLMN while camped normally in a VPLMN, as specified in TS 23.122 [9]. |
| $P_{compensation}$ | For FR1, if the UE supports the *additionalPmax* in the *NR-NS-PmaxList*, if present, in *SIB1*, *SIB2* and *SIB4*: $max(P_{EMAX1} - P_{PowerClass}, 0) - (min(P_{EMAX2}, P_{PowerClass}) - min(P_{EMAX1}, P_{PowerClass}))$ *(dB)*; *else:* $max(P_{EMAX1} - P_{PowerClass}, 0)$ *(dB)* <br><br> For FR2, $P_{compensation}$ is set to 0. |

| $P_{EMAX1}$, $P_{EMAX2}$ | Maximum TX power level of a UE may use when transmitting on the uplink in the cell (dBm) defined as $P_{EMAX}$ in TS 38.101 [15]. If UE supports SUL frequency for this cell, $P_{EMAX1}$ and $P_{EMAX2}$ are obtained from the *p-Max* for SUL in *SIB1* and *NR-NS-PmaxList* for SUL respectively in *SIB1, SIB2* and *SIB4* as specified in TS 38.331 [3], else $P_{EMAX1}$ and $P_{EMAX2}$ are obtained from the *p-Max* and *NR-NS-PmaxList* respectively in *SIB1, SIB2* and *SIB4* for normal UL as specified in TS 38.331 [3]. |
|---|---|
| $P_{PowerClass}$ | Maximum RF output power of the UE (dBm) according to the UE power class as defined in TS 38.101-1 [15]. |

The signalled values $Q_{rxlevminoffset}$ and $Q_{qualminoffset}$ are only applied when a cell is evaluated for cell selection as a result of a periodic search for a higher priority PLMN while camped normally in a VPLMN (TS 23.122 [9]). During this periodic search for higher priority PLMN, the UE may check the S criteria of a cell using parameter values stored from a different cell of this higher priority PLMN.

The UE measures SS-RSRP and SS-RSRQ for the serving cell at least once every M1*N1 DRX cycles and calculates Srxlev and Squal based on the measurement to determine whether the values satisfy the cell selection criterion S. If the criterion S is not satisfied for N DRX cycles for the serving cell, the UE starts RRM measurement for neighbor cells.

In general, the FR1 UE performs RRM measurement either every DRX cycle or every two DRX cycles, and therefore the FR1 UE may need to wake up the MR according to the periodicity. In addition, the UE needs to receive signals to perform paging in every DRX cycle. Therefore, the UE in the RRC IDLE/INACTIVE mode may perform both paging and RRM measurement every DRX cycle or every two DRX cycles, and may trigger the MR to wake up for this purpose. According to the current standard, the UE operations of performing paging and RRM measurement may be determined independently, and thus may be autonomous operations of the UE.

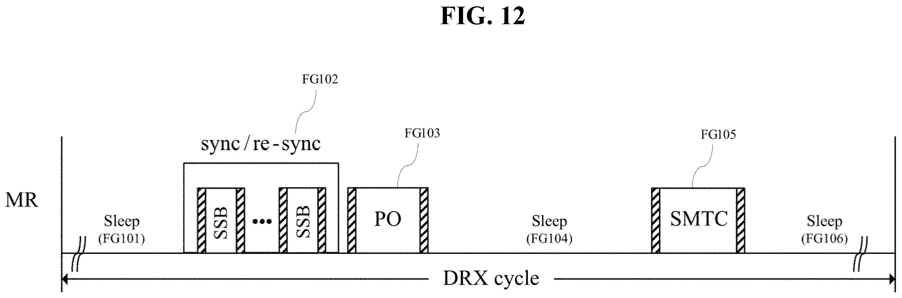

FIG. 12 illustrates an example in which a paging-related procedure and RRM measurement are performed independently.

Referring to FIG. 12, the sleep state (FG101) within the DRX cycle of the UE may be a deep sleep state, or an ultra-deep sleep state if the LP-WUS/LP-WUR is introduced. The UE may wake up from the deep sleep or ultra-deep sleep state and align the MR for the paging operation, and may perform synchronization by receiving an SSB (FG102). The UE may perform synchronization by receiving up to three SSBs after waking up from the deep sleep state. When the UE wakes up from the ultra-deep sleep state, the UE may require receiving up to ten SSBs along with additional SSB search time.

The UE may perform the paging-related procedure such as receiving a paging PDCCH at a paging occasion (PO) (FG103).

The sleep state (FG104) between the paging-related procedure and the RRM measurement may be a light sleep or micro sleep state, depending on the time at which the MR needs to wake up again.

The UE may measure SS-RSRP and SS-RSRQ by receiving an SSB (more precisely, an SSS) within a configured SSB-based measurement timing configuration (SMTC) window (FG105).

After completing all operations that the UE needs to perform within the DRX cycle, the UE may transition back to the deep sleep or ultra-deep sleep state (FG106).

With the introduction of the LP-WUS/LP-WUR, it is being considered that the UE performs RRM measurement using the LR instead of the MR. It may be assumed that power consumption is relatively lower compared to RRM measurement using the MR. Therefore, if the RRM measurement that the MR needs to perform is instead performed by the LR, power savings for the UE may be expected. However, due to the relatively low cost and low power consumption of the LR, the reliability of its RRM measurement results may be relatively limited.

When the UE performs both paging-related operations and RRM measurement within a single DRX cycle, each operation may be performed independently. Depending on the idle time between the operations, the UE may reduce power consumption through operations such as light sleep or micro sleep.

However, if the MR's ultra-deep sleep state is introduced along with the LP-WUR/LP-WUS, the ramp-up time and energy required for the UE to wake up from the ultra-deep sleep state may be significantly large. Therefore, if the UE receives the LP-WUS and wakes up the MR from the ultra-deep sleep state, performing the required operations within the shortest possible time and promptly returning to the sleep state may be effective in reducing the power consumption of the UE.

Additionally, if the UE wakes up the MR from the ultra-deep sleep state, which requires significant time and energy, it may be considered to perform RRM measurement that is not originally required in the corresponding DRX cycle in order to obtain a high-reliability result, which may support the result of subsequent RRM measurement performed using the LR. For example, a method of deriving the overall RRM measurement result by combining a previous result obtained using the relatively reliable MR and a result obtained using the relatively less reliable LR may be considered.

Hereinafter, a method for performing RRM measurement based on the paging of the UE in the corresponding DRX cycle will be described along with required configurations, indications, and UE operations. In the present disclosure, the type of receiver used for RRM measurement may be determined based on whether the UE performs paging.

The present disclosure provides examples in which RRM measurement is performed every DRX cycle or every two DRX cycles, but the proposed methods are not limited to thereto and may also be applied to operations in which RRM measurement is performed every N1*M1*DRX cycles.

The following description is based on periodic RRM measurement. However, the scope of rights is not limited thereto, and the proposed methods may also be applied to all periodically provided signals. In the following, the state in which the MR does not receive signals (at least partially) may refer to at least one of the power off or ultra-deep sleep state, both of which are similar in that transition time is required for the MR.

The following description provides examples based on DRX of the NR system. However, the application of the proposed methods is not limited to NR systems or DRX-supported UEs. In the following description, the distinction between methods or options is intended to clarify the explanation, and each method or option should not be construed as being limited to independent implementation. For example, the methods/options described below may be implemented individually, but at least some of the methods/options may also be implemented in combination to the extent that the methods/options do not conflict with each other.

[Proposal 1]

According to Proposal 1, a receiver to be used for performing RRM measurement, that is, either the MR or the LP-WUR may be determined based on whether the UE performs paging.

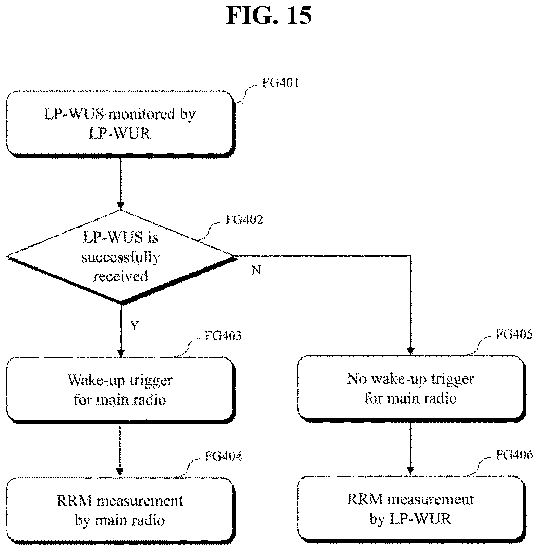

The UE with the LP-WUS/LP-WUR introduced may receive an MR wake-up indication via the LP-WUS (e.g., FG403 in FIG. 15). The UE in the RRC IDLE/INACTIVE mode may determine whether to perform paging (e.g., receive a paging PDCCH through the MR) in the corresponding DRX cycle based on an MR wake-up trigger via the LP-WUS, which may lead to power saving benefits. The LP-WUS may serve to replace a paging early indication (PEI) in the paging procedure or indicate whether the PEI should be transmitted.

If the UE wakes up the MR to perform paging, the UE may utilize the MR to perform RRM measurement as well (e.g., FG404 in FIG. 15). In other words, if the UE receives the LP-WUS for the paging indication in the corresponding DRX cycle, the UE may use the MR to perform not only paging but also RRM measurement.

If there is no paging to be performed by the UE in the corresponding DRX cycle, the UE may not receive the LP-WUS, and as a result, the MR does not wake up and the paging operation is not performed. In such a case, the UE does not need to wake up the MR for performing RRM measurement based on SSB reception (e.g., FG405 in FIG. 15) and may instead perform RRM measurement using the LR (e.g., FG406 in FIG. 15). In this case, the signal targeted for RRM measurement by the LR may be the LP-WUS or LP-SS (a separate synchronization signal receivable by the LR).

(1) Case 1: When MR wake-up is triggered in DRX cycle

To receive an SSB, more precisely an SSS, for measuring SS-RSRP and SS-RSRQ within a DRX cycle, the UE is configured with an SMTC. The SMTC configures a window duration, a periodicity, and an offset. Within the configured SMTC window, the UE may receive the SSB and measure the SS-RSRP and SS-RSRQ.

In FIG. 12, the UE may perform paging and RRM measurement (SS-RSRP and SS-RSRQ measurement) independently. After performing the paging, the UE may either wait for the SMTC window to perform the RRM measurement or enter sleep for power saving. The UE is required to perform the RRM measurement at a specific periodicity (every DRX cycle or every two DRX cycles), but the specific location or timing of the measurement may be autonomously determined by the UE. However, if the LP-WUS/LP-WUR is introduced along with the ultra-deep sleep state of the MR, a large amount of time and energy may be required for the MR to wake up. Thus, reducing the number of wake-ups from the ultra-deep sleep state and the duration of operations after waking up may be effective in reducing the power consumption of the UE.

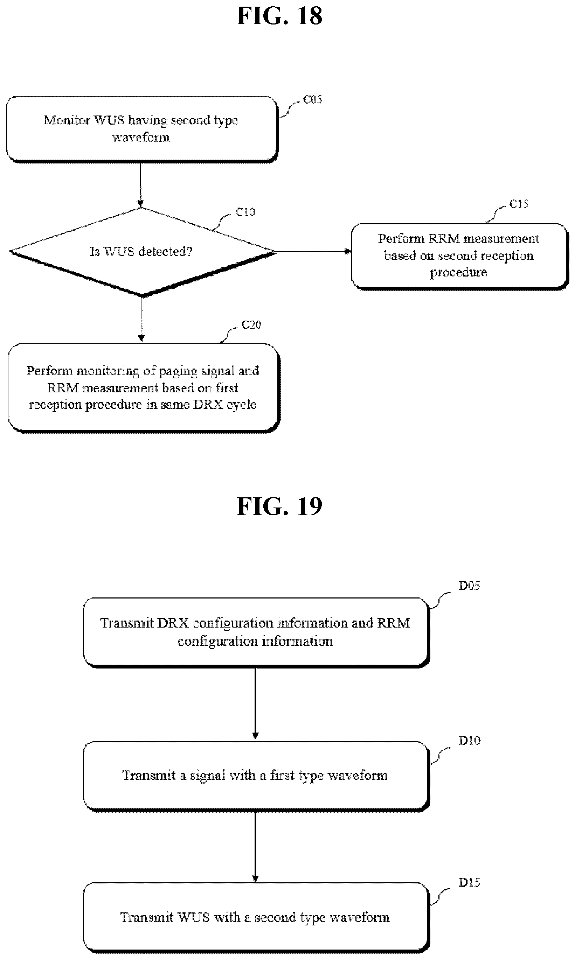

Therefore, if the UE receives the LP-WUS and the MR is triggered (woken up) to perform paging (e.g., C10 Y in FIG. 18), the UE may also perform RRM measurement using the triggered MR (e.g., C20 in FIG. 18). In this case, to minimize the duration of MR operation after the wake-up and enable a quick return to the ultra-deep sleep state, it is proposed to perform the RRM measurement procedure through SSB reception as quickly as possible after the paging procedure.

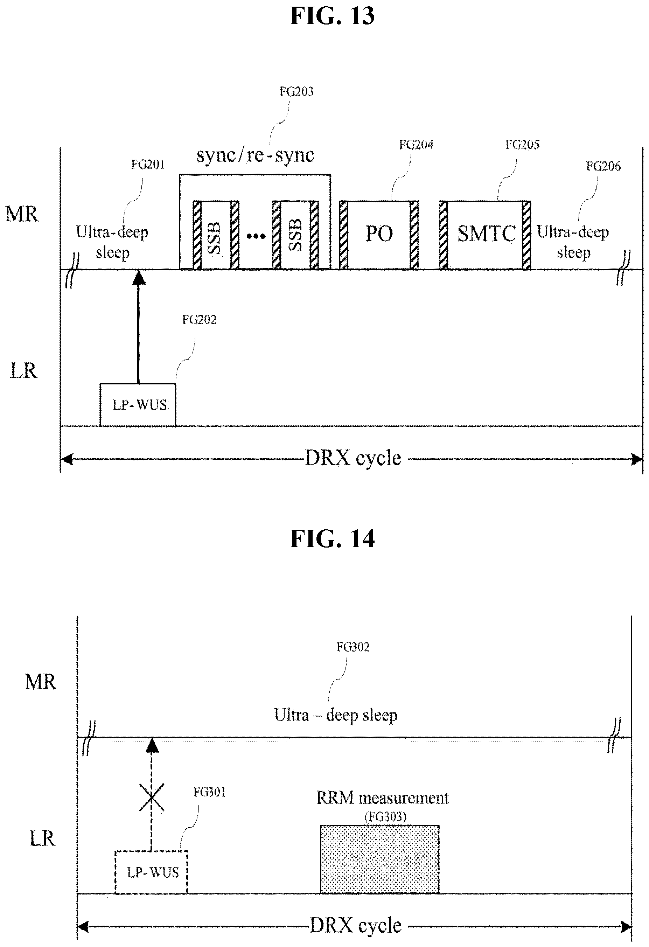

FIG. 13 is a diagram for explaining a UE operation of performing RRM measurement together using a triggered MR.

Referring to FIG. 13, the UE with the LP-WUR/LP-WUS introduced may transition the MR to the ultra-deep sleep state in the absence of separate signal reception, thereby reducing power consumption (FG201).

The UE receives the LP-WUS through the LR, and the received LP-WUS may trigger the wake-up of the MR (FG202).

The UE may perform the synchronization procedure of the woken-up MR (FG203). The synchronization procedure may include reception of multiple SSBs and an SSB search process required therefor.

The UE may perform paging through the MR after the synchronization (FG204).

The UE may complete the paging procedure and perform RRM measurement through SSB reception (as quickly as possible) (FG205).

The UE may complete all required operations in the corresponding DRX cycle and return to the ultra-deep sleep state as quickly as possible (FG206).

The location and timing at which the UE receives the SSB (more precisely, the SSS) for measuring the SS-RSRP and SS-RSRQ are configured by the SMTC. Since the SMTC window is configured with a duration, periodicity, and offset, the UE may receive the SSB in the closest configured SMTC window after completing the paging procedure to perform the RRM measurement.

Alternatively, an additional SMTC window may be configured such that the UE may receive the closest SSB after completing the paging procedure and complete the RRM measurement. The SSB closest to the UE after the paging procedure may not be located within the configured SMTC window, which may result in the UE having to wait for a certain period (until the next SMTC window) before performing the RRM measurement after completing the paging procedure.

Therefore, to address this issue, it may be considered to configure an additional SMTC window that includes the SSB closest to the UE after completing the paging procedure. For example, the PO position of the UE is determined based on UE_ID, and an additional SMTC window may be configured to include the SSB that is closest to the PO. The additional SMTC window may be defined using a method such as a position relative to the PO of the UE (e.g., offset). Alternatively, the additional SMTC may be configured at a location that includes an SSB receivable between the time the UE completes synchronization and the PO. This may be applied to cases where the UE completes synchronization quickly by receiving only a small number of SSBs (e.g., when the SINR is good). Even when the UE completes synchronization quickly, if the UE still needs to wait for the configured PO, and if an SSB is transmitted during the period, an additional SMTC window that includes the SSB may be configured, thereby allowing the UE to complete the RRM measurement before performing paging. For example, if the UE is expected to receive up to 10 SSBs to complete synchronization, the position of the PO may be determined accordingly. In this case, if the SINR is good and the UE completes synchronization by receiving fewer than 10 SSBs, and if an SSB is available before the PO, it may be considered that the UE uses the PO to perform the RRM measurement.

Alternatively, without configuring an additional SMTC window, the UE may be configured to receive an SSB closest to the time when paging is completed or an SSB receivable between the time synchronization is completed and the time before the PO. This may be to enable the UE to receive such an SSB, regardless of the preconfigured SMTC window, thereby performing the RRM measurement procedure quickly using the woken-up MR to reduce power consumption.

The proposed methods may also be applied to cases where the MR is woken up not for paging purposes but for other operations performed by the UE. For example, if the MR is woken up via the LP-WUS to perform operations such as SR transmission or RACH transmission, the UE may perform RRM measurement using the woken-up MR. In such cases, the SSB for RRM measurement may be determined based on the location closest to the timing of the operation to be performed by the UE, or based on an SMTC window that includes the timing.

The MR wake-up operation of the UE may be triggered by LP-WUS reception. Alternatively, the operation may be performed as a result of PEI reception or even in the absence of any specific signal reception for performing paging at the PO configured for the UE. In other words, even in the case where the UE in Rel-15/16/17, which does not support the LP-WUS/LP-WUR, wakes up the MR to receive paging according to the current standard, the proposed methods may be applied in the same manner, excluding the LP-WUS reception.

(2) Case 2: When MR wake-up is not triggered in DRX cycle

If the UE receives no LP-WUS in the corresponding DRX cycle and the MR wake-up is not triggered (i.e., the MR does not wake up), the UE may perform RRM measurement using the LP-WUR instead of the MR (e.g., C15 in FIG. 18). In the corresponding DRX cycle, the UE does not need to perform paging (or any other specific operations), and the current ultra-deep sleep state of the MR may be maintained until the next DRX cycle, thereby reducing power consumption. Since the UE in FR1 needs to perform RRM measurement every DRX cycle or every two DRX cycles, if such an operation is required in the corresponding DRX cycle, the UE may perform the RRM measurement using the LR. In other words, instead of separately waking up the MR for RRM measurement, the UE maintains the ultra-deep sleep state of the MR and performs the measurement using the LR. In this case, the signal targeted for RRM measurement may be the LP-WUS or LP-SS. Alternatively, the LR may receive the SSB to perform the measurement, and the SSB reception may be determined by configurations such as the SMTC window.

FIG. 14 is a diagram for explaining RRM measurement of a UE when no MR wake-up is triggered.

Referring to FIG. 14, the UE receives no LP-WUS, and the MR wake-up is not triggered (FG301). The UE may fail to receive the LP-WUS at an expected location (LP-WUS occasion) or may not receive the LP-WUS at any location within the corresponding DRX cycle. Since the UE receives no LP-WUS in the corresponding DRX cycle, the UE does not perform any operations to trigger the MR wake-up.

Since the UE does not wake up the MR, the MR continues to remain in the ultra-deep sleep state (FG302).

The UE may perform the RRM measurement required in the corresponding DRX cycle using the LR (FG303).

In summary, the overall UE operations in the DRX cycle based on whether the MR wake-up is triggered are as follows.

In the corresponding DRX cycle, the UE attempts to receive the LP-WUS with the LR while maintaining the MR in the ultra-deep sleep state. The transmission of the LP-WUS and the monitoring operation of the LR may be time-continuous or periodic.

If the UE receives the LP-WUS and the LP-WUS triggers the MR wake-up, the UE performs the operations described in Case 1. If the LP-WUS is not received, the UE performs the operations described in Case 2.

Meanwhile, whether the UE receives the LP-WUS may be determined by the time before the PO, which is the location where the UE expects to receive a paging PDCCH in the corresponding DRX cycle. The UE may require a certain amount of time to wake up the MR and perform the synchronization procedure, which means that the MR needs preparation time to be ready to receive a signal at the PO. If this preparation time is defined as $t_{wakeup}$, and the start time of the PO of the UE is defined as $T_{PO}$, the UE needs to determine whether to wake up the MR no later than a time point ($T_{PO}$ - $t_{wakeup}$) in order to successfully perform paging. Therefore, if the UE successfully receives the LP-WUS for the corresponding UE by at least the time point ($T_{PO}$ - $t_{wakeup}$), it is considered that an MR wake-up indication via the LP-WUS is present for the corresponding DRX cycle, and the UE performs the operations of Case 1. Conversely, if the UE fails to successfully receive the LP-WUS for the corresponding UE by at least the time point ($T_{PO}$ - $t_{wakeup}$), it is considered that there is no MR wake-up indication via the LP-WUS for the corresponding DRX cycle, and the UE performs the operations of Case 2.

From the perspective of overall timing operations, a portion of the RRM measurement that the UE needs to perform every DRX cycle or every two DRX cycles may be performed using the MR, and the remaining portion may be performed using the LR. As a result, the UE may partially replace the RRM measurement originally performed by the MR with the RRM measurement performed by the LR, thereby reducing overall power consumption. By reducing the number of times that the UE wakes up the MR and completing the required operations quickly when the MR wakes up, the total power consumption may be further reduced.

[Proposal 2]

According to Proposal 2, if the MR is not triggered in the DRX cycle, the UE may perform RRM measurement at least once for the corresponding DRX cycle.

When the UE performs Proposal 1, the operation may be based on relaxed requirements for RRM measurement using the MR. As described above, the UE needs to perform RRM measurement using the MR every DRX cycle or every two DRX cycles. However, when the UE performs Proposal 1, the LR may perform a portion of the RRM measurement, and as a result, the MR may fail to satisfy the RRM measurement requirements. Therefore, when the UE performs the operations in Proposal 1, the requirements for RRM measurement using the MR may be considered to be relaxed.

In such cases, the relaxed requirements for RRM measurement may be to perform RRM measurement using the MR at least once every N DRX cycles. According to the operations of Proposal 1, if the UE does not perform RRM measurement using the MR, the UE performs the measurement using the LR. Therefore, RRM measurement is performed every DRX cycle or every two DRX cycles, and the resulting values may be measured by either the MR or the LR.

The RRM measurement of the UE may be influenced by the paging rate. The RRM measurement using the MR may be determined based on whether the UE wakes up the MR for paging. For DRX cycles in which the UE does not perform paging, the RRM measurement is performed using the LR, and as a result, the reliability of the RRM measurement results may be lower compared to results obtained using the MR.

To compensate for this, if the UE does not wake up the MR in the corresponding DRX cycle (Case 2), the UE may perform the RRM measurement using the LR at least once. When performing the operations of Case 2, the UE may receive the LP-WUS or LP-SS through the LR to perform RRM measurement, and by performing this operation multiple times, the UE may improve the reliability of the RRM measurement results. It may generally be assumed that the transmission periodicity of the LP-WUS or LP-SS is shorter than the configured DRX cycle, and the UE may expect to receive the LP-WUS or LP-SS multiple times within a single DRX cycle. The number of RRM measurement attempts may be preconfigured or determined by the UE based on independent execution.

For example, if the UE performs the operations of Case 2, the UE may be configured to perform RRM measurement using the LR n times within the corresponding DRX cycle. For the n results, the final measurement result for the corresponding DRX cycle may be determined by taking the average value, the best value, or the worst value.

Alternatively, the UE may first perform RRM measurement using the LR. If the resulting value does not satisfy S, the UE may be configured to repeat the measurement until S is satisfied or be configured to perform the measurement m additional times thereafter.

Based on the results of multiple instances of RRM measurement performed using the LR, the UE may be configured to trigger the MR wake-up. If the results of n instances of measurement do not satisfy a specific condition, for example, if the cell selection criterion S is not met, the UE may trigger the MR to wake up and perform RRM measurement even in the absence of LP-WUS reception.

The proposed operation may be based on the assumption that the power consumption for receiving signals with the LR is significantly lower than the power consumption for receiving signals with the MR.

FIG. 15 is a diagram for explaining paging of a UE in a corresponding DRX cycle and related RRM measurement when the UE receives an LP-WUS.

Referring to FIG. 15, the UE may receive the LP-WUS using the LP-WUR (FG401). In this case, the MR of the UE may remain in the ultra-deep sleep state (or a similar low-power sleep state). The UE may or may not successfully receive the LP-WUS by a designated LP-WUS occasion or a specific time point (FG402). The LP-WUS may indicate paging for the UE or paging for a group or subgroup including the UE. Therefore, upon receiving the LP-WUS, the UE may determine whether the LP-WUS is an indication to wake up the MR or an indication intended for another UE within the same group or subgroup.

If the UE successfully receives the LP-WUS indicating a wake-up for the MR of the UE, the UE triggers the MR to wake up (FG403).

The UE then performs RRM measurement using the woken-up MR (FG404). The location of a target signal may be determined based on the SMTC window or closest SSB described in Proposal 1.

If the UE does not receive the LP-WUS indicating a wake-up for the MR of the UE, the MR remains in the ultra-deep sleep state (FG405).

The UE performs RRM measurement by receiving signals such as the LP-WUS or LP-SS using the LP-WUR (FG406). The RRM measurement using the LP-WUR may be performed one or more times, and this may correspond to the operation described in Proposal 2.

As described above, the UE may determine whether to use the MR or LP-WUR for RRM measurement depending on whether the MR wakes up in the DRX cycle. Accordingly, the UE may significantly reduce power consumption by (partially) replacing RRM measurement originally performed by the MR or extending the periodicity thereof.

Hereinabove, exemplary structures have been illustrated to explain the configurations of UE operations for transmitting and receiving the LP-WUS and performing RRM measurement using the LP-WUR and MR. However, the present disclosure is not limited thereto, and the proposed embodiments may also be applied to various RRM measurement operations.

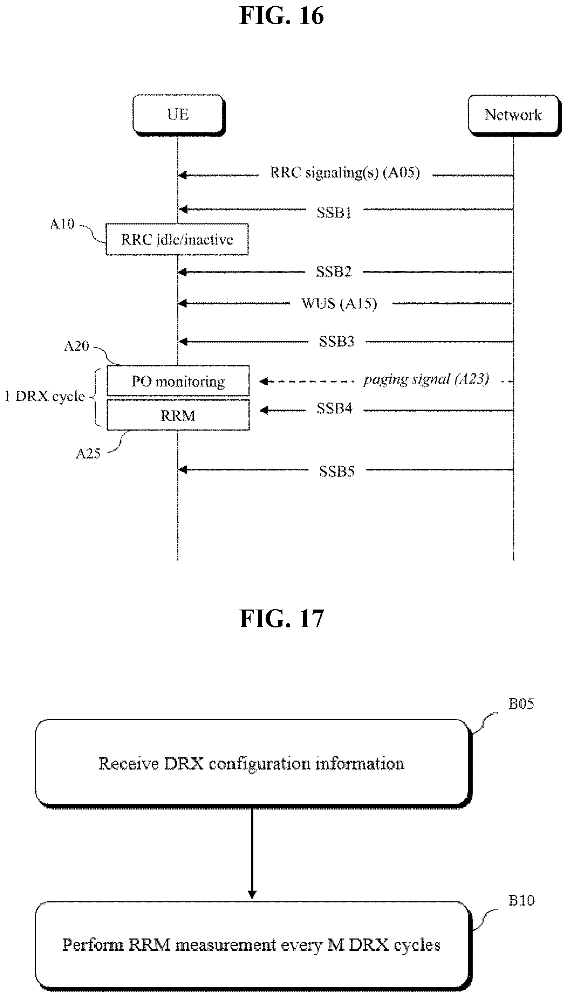

FIG. 16 is a diagram for explaining operations of a network and a UE in a wireless communication system according to an embodiment.

A receiver of the UE may include a first receiver (MR) supporting a first type waveform and a second receiver (LR) supporting a second type waveform. The second receiver may consume less power than the first receiver. The network may periodically broadcast SSBs (e.g., SSB1 to SSB5).

The network may provide RRC signaling at least once to the UE (A05). Through the RRC signaling, DRX configuration information including information regarding a DRX cycle and/or RRM configuration information may be transmitted. The RRM configuration information may be to configure the UE to perform RRM measurement at least once per M DRX cycles.

The UE may transition to the RRC idle/inactive state after receiving the RRC signaling in the RRC connected state (A10). In the RRC idle/inactive state, the UE may at least partially deactivate the first receiver (e.g., MR) and monitor a WUS through the second receiver (e.g., LR).

The UE may detect the WUS (A15) through monitoring.

The UE may perform monitoring of a paging signal on a PO associated with the detected WUS (A20). The monitoring of the paging signal may be performed through the first receiver of the UE.

Even in the RRC idle/inactive state, the UE is required to perform the RRM measurement at least once per M DRX cycles. If the first receiver wakes up based on the WUS detection, the monitoring of the paging signal and the RRM measurement may be performed in the same DRX cycle (A25).

After the paging procedure related to the monitoring of the paging signal is completed within the same DRX cycle, the RRM measurement may be performed. The RRM measurement may be performed based on SSB4 provided after the paging procedure related to the monitoring of the paging signal is completed. SSB4 may be the earliest SSB among the SSBs provided after the paging procedure related to the monitoring of the paging signal.

SSB4 may belong to a first SMTC window provided after the paging procedure related to the monitoring of the paging signal.

If no paging signal is transmitted (A23), the first receiver may be deactivated again after the paging procedure related to the monitoring of the paging signal and the RRM measurement are completed. Then, the UE may continue to remain in the RRC idle/inactive state.

FIG. 17 is a diagram for explaining operations of a UE according to an embodiment.

Referring to FIG. 17, the UE may receive DRX configuration information including information regarding a DRX cycle (B05).

The UE may perform RRM measurement at least once per M DRX cycles configured through the DRX configuration information (B10). For example, the UE may perform the RRM measurement based on at least a part of FIG. 18.

FIG. 18 is a diagram for explaining RRM measurement of a UE according to an embodiment.

For convenience of explanation, it is assumed that the UE operates in the RRC idle/inactive state. A receiver of the UE may include a first receiver (MR) supporting a first type waveform and a second receiver (LR) supporting a second type waveform. The second receiver may consume less power than the first receiver. The first type waveform may be related to orthogonal frequency divisional multiplexing (OFDM), and the second type waveform may be related to non-OFDM (e.g., OOK or OFDM overlaid OOK).

Referring to FIG. 18, the UE may monitor a WUS different from the first type waveform (C05).

The detection of the WUS may be performed through a second reception procedure that supports the second type waveform. The second reception procedure may consume less power than a first reception procedure. The second reception procedure may be performed through the second receiver of the UE. If the WUS is detected as a result of monitoring (C10, Y), the UE may perform monitoring of a paging signal on a PO associated with the detected WUS (C20). The monitoring of the paging signal may be performed through the first receiver of the UE. Meanwhile, as described in FIG. 17, the UE is required to perform RRM measurement at least once per M DRX cycles. If the WUS with the second type waveform is detected in the RRC idle/inactive state, and as a result, the first receiver of the UE wakes up, the UE may perform the RRM measurement through the first receiver in a first DRX cycle where the monitoring of the paging signal is performed through the woken-up first receiver.

The RRM measurement may be performed after a first time resource at which the paging procedure related to the monitoring of the paging signal is completed within the first DRX cycle.

The RRM measurement may be performed based on a first SSB provided after the first time resource among configured SSBs within the first DRX cycle.

The first SSB may be an SSB closest to the first time resource among one or more SSBs provided after the first time resource.

The first SSB may be an SSB included in an earliest SMTC window provided after the first time resource.

Based on that no SSB is included in a first SMTC window that is provided earliest in time after the first time resource, a second SMTC window including the first SSB may be additionally configured.

The first reception procedure, which was deactivated at the time of detecting the WUS, may be activated in the first DRX cycle. After the paging procedure related to the monitoring of the paging signal and the RRM measurement in the first DRX cycle are completed, the first reception procedure may be deactivated again.

If the WUS is not detected as a result of monitoring (No in C10), and the required RRM measurement is not performed before the expiration of the corresponding M DRX cycles, the UE may perform the RRM measurement through the second reception procedure of the second receiver (C15) (e.g., Case 2 of Proposal 1).

FIG. 19 is a diagram for explaining operations of a BS according to an embodiment.

Referring to FIG. 19, the BS may transmit DRX configuration information including information regarding a DRX cycle and/or RRM configuration information to a UE at least once through higher layer signaling (D05). The RRM configuration information may be to configure the UE to perform RRM measurement at least once per M DRX cycles.

The BS may transmit a signal having a first type waveform related to the RRM measurement of the UE (D10).

The BS may transmit a WUS having a second type waveform different from the first type waveform while the UE is in the RRC idle/inactive state (D15).

Based on the transmission of the WUS, the DRX cycle in which the RRM measurement of the UE is performed may be configured to be the same as a first DRX cycle that includes a PO associated with the WUS.

The RRM measurement may be performed after a first time resource at which a paging procedure related to monitoring of a paging signal is completed within the first DRX cycle.

The RRM measurement may be performed based on a first SSB provided after the first time resource among configured SSBs within the first DRX cycle.

The first SSB may be an SSB closest to the first time resource among one or more SSBs provided after the first time resource.

The first SSB may be an SSB included in an earliest SMTC window provided after the first time resource.

Based on that no SSB is included in a first SMTC window that is provided earliest in time after the first time resource, a second SMTC window including the first SSB may be additionally configured.

The first type waveform may be related to OFDM, and the second type waveform may be related to non-OFDM.

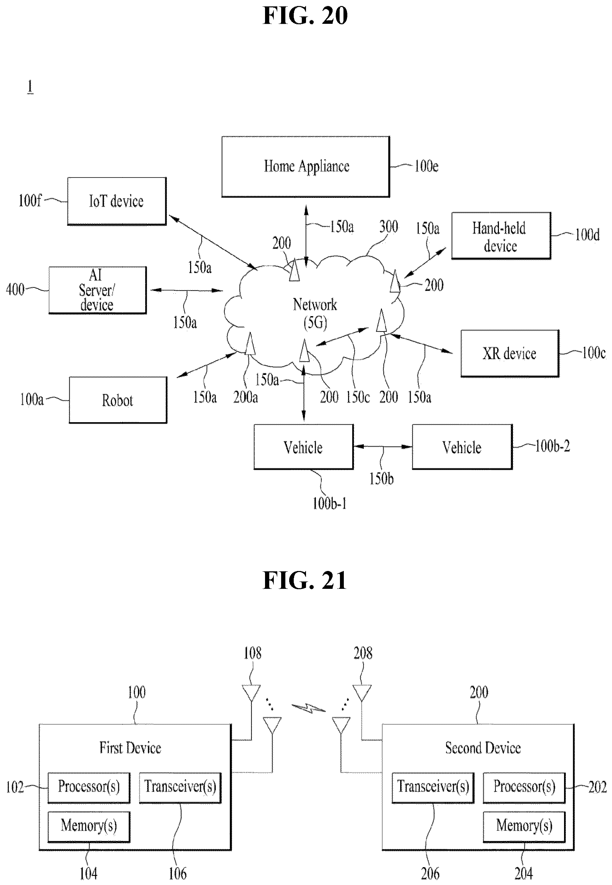

FIG. 20 illustrates a communication system 1 applied to the present disclosure.

Referring to FIG. 20, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 21 illustrates wireless devices applicable to the present disclosure.

Referring to FIG. 21, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 20.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The receiver included in the transceiver(s) 206 may include a first receiver (MR) supporting a first type waveform (e.g., OFDM) and a second receiver (LR) supporting a second type waveform (e.g., OOK). The second receiver may consume less power than the first receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices.

The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

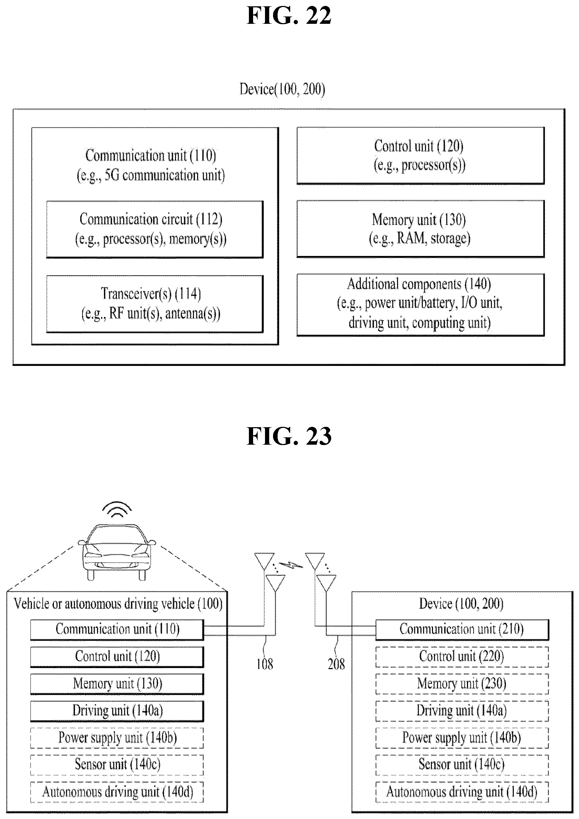

FIG. 22 illustrates another example of a wireless device applied to the present disclosure. The wireless device may be implemented in various forms according to a use-case/service (refer to FIG. 20).

Referring to FIG. 22, wireless devices 100 and 200 may correspond to the wireless devices 100 and 200 of FIG. 21 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 21. For example, the transceiver(s) 114 may include the one or more transceivers 106 and 206 and/or the one or more antennas 108 and 208 of FIG. 21. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 20), the vehicles (100b-1 and 100b-2 of FIG. 20), the XR device (100c of FIG. 20), the hand-held device (100d of FIG. 20), the home appliance (100e of FIG. 20), the IoT device (100f of FIG. 20), a digital broadcast terminal, a hologram device, a public safety device, an MTC device, a medicine device, a fintech device (or a finance device), a security device, a climate/environment device, the AI server/device (400 of FIG. 20), the BSs (200 of FIG. 20), a network node, etc. The wireless device may be used in a mobile or fixed place according to a use-example/service.

In FIG. 22, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 23 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 23, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 22, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of an embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

## Claims

1. A method of performing radio resource management (RRM) measurement by a user equipment (UE) in a wireless communication system, the method comprising:

   receiving discontinuous reception (DRX) configuration information including information regarding a DRX cycle; and
   performing the RRM measurement based on a signal having a first type waveform, at least once per M DRX cycles configured through the DRX configuration information,
   based on detection of a wake-up signal (WUS) having a second type waveform different from the first type waveform in an RRC idle/inactive state, the UE performs the RRM measurement in a first DRX cycle in which monitoring of a paging signal is performed.

2. The method of claim 1, wherein the RRM measurement is performed after a first time resource at which a paging procedure related to the monitoring of the paging signal is completed within the first DRX cycle.

3. The method of claim 2, wherein the RRM measurement is performed based on a first synchronization signal block (SSB) provided after the first time resource among configured SSBs within the first DRX cycle.

4. The method of claim 3, wherein the first SSB is an SSB closest to the first time resource among one or more SSBs provided after the first time resource.

5. The method of claim 3, wherein the first SSB is an SSB included in an earliest SSB-based measurement time configuration (SMTC) window provided after the first time resource.

6. The method of claim 3, wherein based on that no SSB is included in a first SSB-based measurement time configuration (SMTC) window that is provided earliest in time after the first time resource, a second SMTC window including the first SSB is additionally configured.

7. The method of claim 1, wherein the RRM measurement is performed through a first reception procedure supporting the first type waveform,

   wherein the detection of the WUS is performed through a second reception procedure supporting the second type waveform, and
   wherein the second reception procedure consumes less power than the first reception procedure.

8. The method of claim 7, wherein the first reception procedure, which is deactivated at a time of the detection of the WUS, is activated in the first DRX cycle, and
   wherein after a paging procedure related to the monitoring of the paging signal and the RRM measurement in the first DRX cycle are completed, the first reception procedure is deactivated again.

9. The method of claim 1, wherein the first type waveform is related to orthogonal frequency divisional multiplexing (OFDM), and
   wherein the second type waveform is related to non-OFDM.

10. A computer-readable recording medium having recorded thereon a program for executing the method of claim 1.

11. A device for wireless communication, the device comprising:

    a memory configured to store instructions; and
    a processor configured to perform operations by executing the instructions,
    wherein the operations of the processor comprise:

    receiving discontinuous reception (DRX) configuration information including information regarding a DRX cycle; and
    performing radio resource management (RRM) measurement based on a signal having a first type waveform, at least once per M DRX cycles configured through the DRX configuration information,
    based on detection of a wake-up signal (WUS) having a second type waveform different from the first type waveform in an RRC idle/inactive state, the RRM measurement is performed in a first DRX cycle in which monitoring of a paging signal is performed.

12. The device of claim 11, further comprising:

    a first receiver configured to support the first type waveform; and
    a second receiver configured to support the second type waveform,
    wherein the second receiver consumes less power than the first receiver.

13. The device of claim 11, wherein the device is a user equipment (UE) operating in a wireless communication system or a processing device configured to control the UE.

14. A method of transmitting signals by a base station (BS) in a wireless communication system, the method comprising:

transmitting discontinuous reception (DRX) configuration information including information regarding a DRX cycle to a user equipment (UE);
transmitting radio resource management (RRM) configuration information for performing RRM measurement at least once per M DRX cycles to the UE;
transmitting a signal having a first type waveform related to the RRM measurement of the UE; and
transmitting a wake-up signal (WUS) having a second type waveform different from the first type waveform while the UE is in an RRC idle/inactive state,
wherein based on the transmission of the WUS, the DRX cycle in which the RRM measurement of the UE is performed is configured to be identical to a first DRX cycle including a paging occasion (PO) associated with the WUS.

15. A base station (BS) for wireless communication, the BS comprising:

a memory configured to store instructions; and
a processor configured to perform operations by executing the instructions,
wherein the operations of the processor comprise:

transmitting discontinuous reception (DRX) configuration information including information regarding a DRX cycle to a user equipment (UE);
transmitting radio resource management (RRM) configuration information for performing RRM measurement at least once per M DRX cycles to the UE;
transmitting a signal having a first type waveform related to the RRM measurement of the UE; and
transmitting a wake-up signal (WUS) having a second type waveform different from the first type waveform while the UE is in an RRC idle/inactive state,
wherein based on the transmission of the WUS, the DRX cycle for the UE to perform the RRM measurement is configured to be identical to a first DRX cycle including a paging occasion (PO) associated with the WUS.

# FIG. 1

| Initial Cell Search | System Information Reception | Random Access Procedure | General DL/UL Tx/Rx |
|---|---|---|---|

S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101    S102    S103    S104    S105    S106    S107

• DL/UL ACK/NACK
• UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

15KHz

| Slot (14 symbols) |
|---|

1ms

30KHz

| Slot 0 (14 symbols) | Slot 1 |
|---|---|

500us

60KHz

| Slot 0 (14 symbols) | Slot 1 | Slot 2 | Slot 3 |
|---|---|---|---|

250us

120KHz

| Slot 0 (14 symbols) | Slot 1 | Slot 2 | Slot 3 | Slot 4 | Slot 5 | Slot 6 | Slot 7 |
|---|---|---|---|---|---|---|---|

125us

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

Long PUSCH

PDCCH

Gap

PDSCH/PUSCH

Short PUCCH

Long PUSCH

One slot

f

t

# FIG. 5

UE

BS

CORESET configuration    S502

SS configuration    S504

PDCCH generation    S506

PDCCH candidate
monitoring in the
configured SS    S508

EP 4 694 297 A1

# FIG. 6

DL assingment-to-PDSCH offset (K0)

| PDCCH | | | | PDSCH | | | | | PUCCH | |

slot

PDSCH-to-HARQ-ACK reporting offset (K1)

# FIG. 7

UL grant-to-PUSCH offset (K2)

| PDCCH | | | | | PUSCH | | |

# FIG. 8

On Duration — Opportunity for DRX

UE shall monitor
PDCCH

DRX Cycle

34

# FIG. 9

# FIG. 10

# FIG. 11

## FIG. 12

# FIG. 13

FG203

sync/re-sync

FG201

FG204    FG205

FG206

MR

Ultra-deep sleep

SSB ... SSB

PO

SMTC

Ultra-deep sleep

FG202

LR

LP-WUS

◄——————————— DRX cycle ———————————►

# FIG. 14

FG302

MR

Ultra – deep sleep

FG301

RRM measurement
(FG303)

LR

LP-WUS

◄——————————— DRX cycle ———————————►

# FIG. 15

FG401 — LP-WUS monitored by LP-WUR

FG402 — LP-WUS is successfully received

N

Y

FG403 — Wake-up trigger for main radio

FG405 — No wake-up trigger for main radio

FG404 — RRM measurement by main radio

FG406 — RRM measurement by LP-WUR

# FIG. 16

# FIG. 17

# FIG. 18

Monitor WUS having second type waveform — C05

Is WUS detected? — C10

Perform RRM measurement based on second reception procedure — C15

Perform monitoring of paging signal and RRM measurement based on first reception procedure in same DRX cycle — C20

# FIG. 19

Transmit DRX configuration information and RRM configuration information — D05

Transmit a signal with a first type waveform — D10

Transmit WUS with a second type waveform — D15

# FIG. 20

# FIG. 21

# FIG. 22

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 23

Vehicle or autonomous driving vehicle (100)

| Communication unit (110) |
| Control unit (120) |
| Memory unit (130) |
| Driving unit (140a) |
| Power supply unit (140b) |
| Sensor unit (140c) |
| Autonomous driving unit (140d) |

108      208

Device (100, 200)

| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2024/004494** |

**A.    CLASSIFICATION OF SUBJECT MATTER**

**H04W 24/08**(2009.01)i; **H04W 68/02**(2009.01)i; **H04W 52/02**(2009.01)i; **H04W 76/28**(2018.01)i; **H04B 17/318**(2015.01)i

According to International Patent Classification (IPC) or to both national classification and IPC

**B.      FIELDS SEARCHED**

Minimum documentation searched (classification system followed by classification symbols)

H04W 24/08(2009.01); H04B 17/373(2015.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DRX cycle, RRC idle/inactive state, WUS, RRM measurement, SSB, SMTC, OFDM, Non-OFDM

**C.      DOCUMENTS CONSIDERED TO BE RELEVANT**

| Category* | Citation of document, with indication, where appropriate, of the relevant passages | Relevant to claim No. |
|---|---|---|
| Y | VIVO. Evaluation methodologies for R18 LP-WUS/WUR. R1-2300476, 3GPP TSG RAN WG1 #112. Athens, Greece. 17 February 2023.<br>See pages 3-31; and figure 1. | 1-15 |
| Y | INTEL CORPORATION. Discussions on L1 signal design and procedure for LP-WUS. R1-2300971, 3GPP TSG RAN WG1 #112. Athens, Greece. 17 February 2023.<br>See sections 3.2-3.3; and figures 4-5. | 1-15 |
| Y | KR 10-2021-0024194 A (SAMSUNG ELECTRONICS CO., LTD.) 04 March 2021 (2021-03-04)<br>See paragraph [0014]; and claim 1. | 5-6 |
| A | LG ELECTRONICS. Discussion on L1 signal design and procedure for LP-WUS. R1-2301113, 3GPP TSG RAN WG1 #112. Athens, Greece. 17 February 2023.<br>See sections 2-3. | 1-15 |
| A | QUALCOMM INCORPORATED. L1 signal design and procedures for LP-WUR. R1-2301440, 3GPP TSG RAN1 Meeting #112. Athens, Greece. 17 February 2023.<br>See sections 2-7. | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 July 2024** | **16 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2024/004494** |
|---|---|---|---|

| Patent document<br>cited in search report | Publication date<br>(day/month/year) | Patent family member(s) | Publication date<br>(day/month/year) |
|---|---|---|---|
| KR      10-2021-0024194      A | 04 March 2021 | EP          3824661       A1 | 26 May 2021 |
| | | US          11071000      B2 | 20 July 2021 |
| | | US          11689955      B2 | 27 June 2023 |
| | | US      2020-0029238     A1 | 23 January 2020 |
| | | US      2021-0345154     A1 | 04 November 2021 |
| | | WO      2020-017928      A1 | 23 January 2020 |

Form PCT/ISA/210 (patent family annex) (July 2022)